# EUROPÄISCHE PATENTSCHRIFT

(11) **EP 3 456 005 B1**
(45) Veröffentlichungstag und Bekanntmachung des Hinweises auf die Patenterteilung: **02.03.2022**
(21) Anmeldenummer: 17713597.7
(22) Anmeldetag: 17.03.2017
(51) Int. Cl.: H04L 12/28, H04W 4/00, H04W 4/80

(54) **MOBILES KOMMUNIKATIONSGERÄT MIT EINER BENUTZERSCHNITTSTELLENDARSTELLUNG ABHÄNGIG VON EINEM AN EINER SCHNITTSTELLE ERFASSTEN PARAMETER**
MOBILE COMMUNICATION DEVICE HAVING A USER INTERFACE DEPICTION ON THE BASIS OF A PARAMETER CAPTURED ON AN INTERFACE
APPAREIL DE COMMUNICATION MOBILE POURVU D'UNE PRÉSENTATION INTERFACE UTILISATEUR DÉPENDANTE D'UN PARAMÈTRE DÉTECTÉ SUR UNE INTERFACE

(30) Priorität: 09.05.2016 DE 102016207919
(43) Veröffentlichungstag der Anmeldung: 20.03.2019
(73) Patentinhaber: Tridonic GmbH & Co KG, 6851 Dornbirn (AT)
(72) Erfinder: SEVERIN, Dieter, 6890 Lustenau (AT)
(74) Vertreter: Rupp, Christian
(86) Internationale Anmeldenummer: PCT/EP2017/056356
(87) Internationale Veröffentlichungsnummer: WO 2017/194230

(56) Entgegenhaltungen:
- WO-A1-2015/039874
- DE-A1-102014 009 827
- DE-A1-102014 201 467

## Beschreibung

Die Erfindung stellt ein mobiles Kommunikationsendgerät, ein Gebäudetechniksystem und ein System aus einem mobilen Kommunikationsendgerät und einem Gebäudetechniksystem bereit.

Ausgangspunkt der Erfindung ist, dass zur Steuerung von Gebäudetechniksystemen und insbesondere Beleuchtungssystemen vorzugsweise im Innenbereich (Indoor-Bereich) häufig Fernbedienungen eingesetzt werden, die abhängig von dem verwendeten Gebäudetechniksystem oder auch von einem bestimmten Bereich in einem Gebäude, beispielsweise einem Raum, unterschiedliche Funktionen bereitstellen oder spezifisch ausgestaltet sein können. Das bedeutet, dass ein Benutzer zuerst erkennen und sicherstellen muss, dass die richtige Fernbedienung bzw. Bedieneinheit für das Gebäudetechniksystem und/oder den Bereich in dem Gebäude verfügbar ist. Anschließend muss sich der Benutzer mit der Bedienung der Bedieneinheit vertraut machen.

Dass einerseits verschiedene Bedieneinheiten für verschiedene Gebäudesysteme vorgesehen sind und andererseits auch innerhalb eines Gebäudetechniksystems verschiedene Bedieneinheiten zu verwenden sind, ist bereits problematisch, da ein Benutzer sich abhängig von dem verwendeten Gebäudetechniksystem und/oder von dem Bereich innerhalb des Gebäudes jeweils an eine neue Bedienung anpassen oder diese erlernen muss. Einerseits erfordert dies eine Einarbeitungszeit auf Seiten des Benutzers, andererseits kann dies zu Fehlbedienungen durch den Benutzer führen.

Die Druckschrift DE 102014201467 A1 offenbart ein Raumgerät und System zur zeitlich und/oder örtlich begrenzten Steuerung von Komfortgrößen und der Infrastruktur eines Raumes über ein mobiles Gerät eines Benutzers, Z.B. Smartphone oder Tablet-Computer, wobei das mobile Gerät nicht zur Infrastruktur des Raumes gehört, sondern sich im Eigentum bzw. Besitz des Benutzers befindet. Durch einen nur lokal verfügbaren Freischaltcode erfolgt ein sicherer Zugang zu Kontrollfunktionalitäten für Komfortgrößen (z.B. Temperatursteuerung, Lüftungssteuerung) bzw. zu im Raum vorhandener Infrastruktur (z.B. Telefonanlage, Beamer).

Die Druckschrift WO 2016001103 A1 (deren prioritätsbegründende Anmeldung als DE 10 2014 009827 veröffentlicht wurde) offenbart ein System zum Entriegeln und Verriegeln eines Schließmechanismus. Das System weist eine Fernbedienung; und eine Steuereinheit mit einer eine Zugangsberechtigung überprüfenden Elektronik auf, wobei die Steuereinheit über eine drahtlose Verbindung mittels der Fernbedienung steuerbar ist und den Schließmechanismus entsprechend der Zugangsberechtigung steuert. Die vorliegende Erfindung betrifft ferner ein Verfahren und die Verwendung einer Fernbedienung zum Entriegeln und Verriegeln eines Schließmechanismus insbesondere unter Verwendung des beschriebenen Systems.

Die Druckschrift WO 2015/039874 A1 offenbart ein Verfahren zum Anbinden eines Haushaltsgeräts an ein drahtloses Heimnetzwerk, umfassend folgende Schritte: Empfangen von Zugangsdaten des Heimnetzwerks durch ein tragbares Kommunikationsendgerät; Aufbauen einer von dem Heimnetzwerk separaten drahtlosen Kommunikationsverbindung zwischen dem Haushaltsgerät einerseits und dem tragbaren Kommunikationsendgerät andererseits gemäß einem vorbestimmten Nahdistanz-Kommunikationsstandard; und Übertragen von Steuerbefehlen von dem tragbaren Kommunikationsendgerät über die Kommunikationsverbindung an das Haushaltsgerät , wobei durch die Steuerbefehle das Haushaltsgerät zum Anbinden an das drahtlose Heimnetzwerk unter Verwendung der Zugangsdaten angesteuert wird.

Die Erfindung macht es sich daher zur Aufgabe, dieses Problem dadurch zu lösen, dass durch ein Kommunikationsendgerät eine einheitliche Benutzerschnittstelle dargestellt wird, die jeweils vordefinierte Funktionen bietet, wobei diese Funktionen beispielsweise durch eine softwaretechnische Anwendung für das jeweils verwendete Gebäudetechniksystem bzw. den entsprechenden Bereich in einem Gebäude passend umgesetzt wird.

Dazu erfasst das mobile Kommunikationsendgerät ein einer seiner Schnittstellen einen Parameter. Auf Basis dieses erfassten wenigstens einen Parameters kann dann einerseits die Umsetzung der bereitgestellten Bedienfunktionen definiert werden. Andererseits ist es auch möglich, dass beispielsweise abhängig von dem Parameter die bereitzustellenden Funktionen bzw. Bedienfunktionen definiert werden bzw. auch deren Anzeige und Darstellungen abhängig von dem wenigstens einen erfassten Parameter erfolgt.

Die Erfindung stellt daher ein mobiles Kommunikationsendgerät, ein Gebäudetechniksystem, sowie ein System aus einem mobilen Kommunikationsendgerät und ein Gebäudetechniksystem bereit, wie es mit den unabhängigen Ansprüchen beansprucht ist. Weiterbildungen der Erfindungen sind Gegenstand der abhängigen Ansprüche.

In einem ersten Aspekt wird ein mobiles Kommunikationsendgerät bereitgestellt, aufweisend eine Anzeigeeinheit und eine Eingabeeinheit, vorzugsweise eine kombinierte Eingabe-und-Anzeigeeinheit, eine Nahfeld-Kommunikationsschnittstelle, und eine Steuereinheit, wobei die Steuereinheit dazu eingerichtet ist, über die Nahfeld-Kommunikationsschnittstelle wenigstens einen Parameter eines Gebäudetechniksystems auszulesen und für eine durch das mobile Kommunikationsendgerät ausgeführte softwaretechnische Anwendung bereitzustellen, wobei die softwaretechnische Anwendung dazu ausgelegt ist, abhängig von dem wenigstens einen Parameter eine Benutzerschnittstelle auf der Anzeigeeinheit darzustellen und eine Benutzereingabe an der Benutzerschnittstelle über die Eingabeeinheit auszuwerten und auf der Benutzereingabe basierende Ansteuerdaten an das Gebäudetechniksystem zu senden.

Erfindungsgemäß stellt die softwaretechnische Anwendung Funktionen zur Steuerung des Gebäudetechniksystems bereit, die verschiedene Komplexitäten aufweisen. Die softwaretechnische Anwendung stellt dabei die Funktionen mittels der Benutzerschnittstelle gemäß ihrer Komplexität gruppiert auf mehreren logischen Ebenen dar.

Die softwaretechnische Anwendung kann zusätzliche Informationen zu den Funktionen bereitstellen. Die softwaretechnische Anwendung kann die zusätzlichen Informationen mittels der Benutzerschnittstelle darstellen, insbesondere in Assoziation zu den Funktionen zur Steuerung des Gebäudetechniksystems und/oder auf eine Benutzereingabe hin.

Die Funktionen können eine Szenenkonfiguration erstellen, zu verändern und/oder löschen.

Die softwaretechnische Anwendung kann Benutzereingaben über die Eingabeeinheit auswerten und die Funktionen oder einen Teil der Funktionen nach Auswertung einer insbesondere vordefinierten Benutzereingabe bereitstellen. Die vordefinierte Benutzereingabe dient vorzugsweise zur Autorisierung.

Die softwaretechnische Anwendung kann die Ansteuerdaten über wenigstens eine weitere Kommunikationsschnittstelle des mobilen Kommunikationsendgeräts, insbesondere eine drahtlose Kommunikationsschnittstelle, an das Gebäudetechniksystem senden.

Das mobile Kommunikationsendgerät kann eine Speichereinheit aufweisen, die Benutzerschnittstellenkonfigurationen speichern kann. Die Steuereinheit und/oder die softwaretechnische Anwendung können in Assoziation mit dem wenigstens einen Parameter wenigstens eine Benutzerschnittstellenkonfiguration der Benutzerschnittstellenkonfigurationen abrufen, und die Benutzerschnittstelle gemäß der wenigstens einen abgerufenen Benutzerschnittstellenkonfiguration darstellen.

Die Speichereinheit kann Definitionen für zulässige Benutzereingaben speichern. Die Steuereinheit und/oder die softwaretechnische Anwendung kann in Assoziation mit dem wenigstens einen Parameter, wenigstens eine definierte zulässige Benutzereingabe abrufen und lediglich Ansteuerdaten basierend auf der wenigstens einen definierten zulässigen Benutzereingabe senden.

Die Steuereinheit kann die softwaretechnische Anwendung automatisch starten, wenn sie über die Nahfeld-Kommunikationsschnittstelle den wenigstens einen Parameter ausliest.

Die softwaretechnische Anwendung kann auf Basis des wenigstens einen Parameters die wenigstens eine weitere Kommunikationsschnittstelle des mobilen Kommunikationsendgeräts auswählen, und über die ausgewählte wenigstens eine Kommunikationsschnittstelle die Ansteuerdaten senden.

Die softwaretechnische Anwendung kann auf Basis des wenigstens einen Parameters eine Adresse und/oder eine Adressierungsart zur Ansteuerung des Gebäudetechniksystems ermitteln.

Der wenigstens eine Parameter kann zulässige Benutzereingaben definieren. Die softwaretechnische Anwendung kann lediglich für die zulässigen Benutzereingaben die Funktionen darstellen und Eingaben über die Eingabeeinheit akzeptieren.

Die softwaretechnische Anwendung kann basierend auf dem wenigstens einen Parameter einen Fernbedienungstyp als Benutzerschnittstelle darstellen, der einem für das Gebäudetechniksystem vorgesehenen Fernbedienungstyp entspricht, der insbesondere durch den wenigstens einen Parameter in der Speichereinheit identifizierbar ist.

Die softwaretechnische Anwendung kann basierend auf dem wenigstens einen Parameter Sensor-Informationen mittels der Benutzerschnittstelle ausgeben.

Die Ansteuerdaten können Konfigurationsdaten, insbesondere zur Konfiguration von Aktoren, Sensoren und/oder Busteilnehmern des Gebäudetechniksystems sein.

Das Gebäudetechniksystem kann ein Licht- und/oder Beleuchtungssystem sein. Die Nahfeld-Kommunikationsschnittstelle kann eine RFID und/oder NFC-Schnittstelle sein. Die wenigstens eine weitere Kommunikationsschnittstelle kann eine Bluetooth, WLAN, und/oder Zigbee-Schnittstelle sein.

In einem weiteren Aspekt wird ein Gebäudetechniksystem bereitgestellt, aufweisend wenigstens eine Nahfeld-Kommunikationsschnittstelle, wobei das Gebäudetechniksystem dazu eingerichtet ist, insbesondere wenigstens einen Parameter des Gebäudetechniksystems über die wenigstens eine Nahfeld-Kommunikationsschnittstelle, vorzugsweise veränderlich, auszugeben, eine Steuereinheit, und wenigstens eine weitere Kommunikationsschnittstelle, wobei die Steuereinheit dazu eingerichtet ist, das Gebäudetechniksystem oder Teile davon, insbesondere Gebäudetechniksystemkomponenten, auf Basis von über die wenigstens eine weitere Kommunikationsschnittstelle empfangenen Ansteuerdaten zu steuern und/oder zu konfigurieren.

Der wenigstens eine Parameter kann das Gebäudetechniksystem und/oder die wenigstens eine weitere Kommunikationsschnittstelle des Gebäudetechniksystems identifizieren.

Das Gebäudetechniksystem kann Sensoren, Aktoren und/oder Busteilnehmer als Gebäudetechniksystemkomponenten aufweisen, und die Steuereinheit kann die Gebäudetechniksystemkomponenten auf Basis der Ansteuerdaten steuern und/oder konfigurieren.

In noch einem weiteren Aspekt wird ein System aus einem mobilen Kommunikationsendgerät und einem Gebäudetechniksystem bereitgestellt, wie sie hierin beschrieben sind.

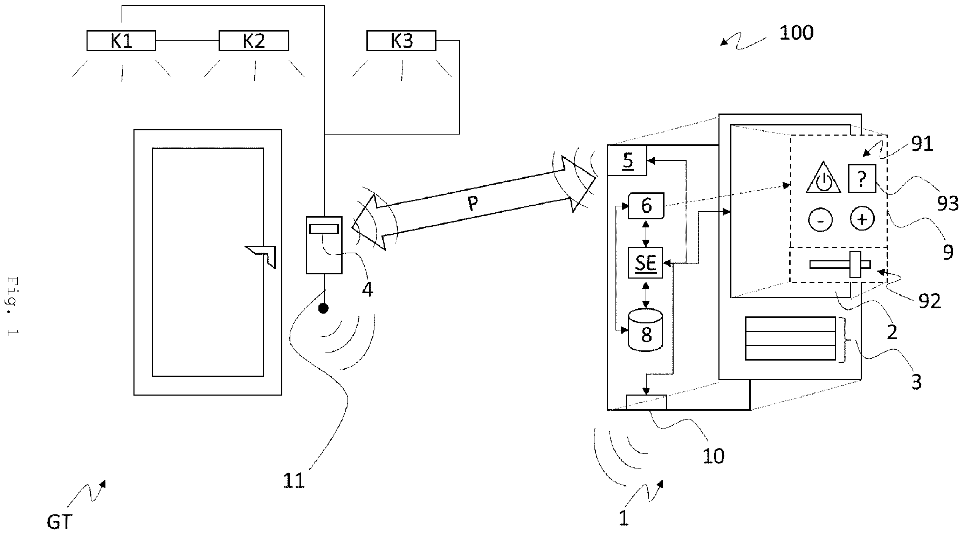

Die Erfindung wird nunmehr auch mit Blick auf die Figuren beschrieben. Dabei zeigt
- Fig. 1: schematisch ein Kommunikationsendgerät, ein Gebäudetechniksystem und ein System nach der Erfindung.

Das Gebäudetechniksystem stellt, beispielsweise in einem Eingangsbereich eines Raumes und vorzugsweise an einer Schalteranordnung, z.B. einem Lichtschalter, eine Kommunikationsschnittstelle bereit. Bei der Kommunikationsschnittstelle handelt es sich vorzugsweise um eine Funkschnittstelle, insbesondere eine Zigbee-, Bluetooth- und/oder Nahfeld-Kommunikationsschnittstelle (NFC, RFID). Die Kommunikationsschnittstelle wird derart bereitgestellt, dass ein Benutzer damit mit einem Kommunikationsendgerät, insbesondere einem Smartphone, Tablet, und/oder Notebook kommunizieren kann.

So kann bei Vorsehen einer Nahfeld-Kommunikationsschnittstelle beispielsweise ein Smartphone, das ebenfalls mit einer passenden Nahfeld-Kommunikationsschnittstelle ausgestattet ist, durch eine Kommunikation mit der Nahfeld-Kommunikationsschnittstelle des Gebäudetechniksystems einen Parameter erfassen, wenn das Smartphone nah genug an die Nahfeld-Kommunikationsschnittstelle des Gebäudetechniksystems, also in einen Nahfeld-Kommunikationsbereich, gebracht wird. Bei der Nahfeld-Kommunikationsschnittstelle des Gebäudetechniksystems kann es sich insbesondere um eine RFID-Schnittstelle handeln. Insbesondere kann ein RFID-Transponder vorgesehen sein, der einen vorbestimmten Parameter ausgibt, wenn ein mobiles Kommunikationsendgerät in den Nahfeld-Kommunikationsbereich für den Transponder eintritt und das mobile Kommunikationsendgerät eine entsprechende Abfrage mittels der Nahfeld-Kommunikationsschnittstelle des mobilen Kommunikationsendgerät durchführt.

Auf dem mobilen Kommunikationsendgerät ist eine softwaretechnische Anwendung installiert, die den erfassten Parameter aus der Kommunikation mit der Kommunikationsschnittstelle des Gebäudetechniksystems auswertet.

Es wird also vorzugsweise über eine Nahfeld-Kommunikation eine Information hinsichtlich wenigstens eines Parameters des Gebäudetechniksystems bzw. eines bestimmten Bereiches in einem Gebäude ausgelesen und der softwaretechnischen Anwendung bereitgestellt.

Das hat den Vorteil, dass der Benutzer mit einem einheitlich konfigurierten Kommunikationsendgerät, d.h. beispielsweise dem Smartphone mit der softwaretechnischen Anwendung, unabhängig von der konkreten Installation des Gebäudetechniksystems und der Art des Gebäudetechniksystems immer in der gleichen Art und Weise eine gewünschte Steuerung mittels des mobilen Kommunikationsendgeräts durchführen kann. Die softwaretechnische Anwendung auf dem Kommunikationsendgerät stellt unterschiedlich komplexe Bedienebenen bereit, die abhängig von dem erfassten wenigstens einen Parameter konfiguriert werden können, so dass beispielsweise Funktionen abhängig von ihrer Komplexität auf unterschiedlichen visuellen Ebenen dargestellt werden. So sind erfindungsgemäß auf einer ersten Ebene lediglich einfache Funktionen wie beispielsweise ein Ein- und/oder Ausschalten, ein Dimmen, und/oder andere Basiseinstellungen von Komponenten des Gebäudetechniksystems (wie Leuchten, Sensoren, Aktoren (beispielsweise Motoren), schaltbare Steckdosen, ...) aufrufbar, während in weiteren, "tieferen", Ebenen dann komplexere Funktionen bzw. Bedienfunktionen wie Programmierungen und Anweisungen an das Gebäudetechniksystem eingegeben werden können. So können beispielsweise Sensoren oder andere Komponenten des Gebäudetechniksystems konfiguriert werden. Komponenten des Gebäudetechniksystems sind insbesondere Busteilnehmer des Gebäudetechniksystems und/oder Gebäudetechnikgeräte, vorzugsweise Busteilnehmer eines Beleuchtungsbussystems. Über die softwaretechnische Anwendung ist auch eine Abfrage von Parametern der Komponenten des Gebäudetechniksystems möglich. So können beispielsweise Sensoren oder Busteilnehmer dahingehend ausgewertet werden, wann sie ein bestimmtes Ereignis erfasst haben, wann eine bestimmte Funktion ausgeführt wurde, und/oder welche Betriebsparameter über einen bestimmten Zeitraum eingestellt, gesetzt und/oder erfasst wurden. So ist es beispielsweise möglich, die Anzahl der erfassten Erkennungen eines Bewegungs- bzw. Präsenzmelders auszuwerten.

Die eigentliche Kommunikation zwischen dem mobilen Kommunikationsendgerät und dem Gebäudetechniksystem erfolgt jedoch bevorzugt nicht mittels der Nahfeld-Kommunikation, da diese vorzugsweise nur zum Auslesen der zur Verfügung stehenden Parameter zur Bedienung des Gebäudetechniksystems, insbesondere einer Lichtinstallation, verwendet wird. Die Kommunikation erfolgt vielmehr Out-Of-Band dazu, vorzugsweise drahtlos, über andere Kommunikationstechniken, wie beispielsweise Bluetooth, WLAN oder Zigbee. Dabei ist zu verstehen, dass beispielsweise Kommunikationsparameter, die zur Out-Of-Band-Kommunikation notwendig sind ebenfalls mittels der Nahfeld-Kommunikation zwischen dem mobilen Kommunikationsendgerät und dem Gebäudetechniksystem übertragen werden können. Weiter kann, wenn das mobile Kommunikationsendgerät in eine Nahfeldkommunikation mit dem Gebäudetechniksystem eintritt, die softwaretechnische Anwendung gestartet werden, insbesondere automatisch.

Ebenfalls kann durch die Parametererfassung über die Nahfeld-Kommunikationsschnittstelle auch die Art und Weise der Ansteuerung übermittelt werden, d.h. an das mobile Kommunikationsendgerät wird dann auch eine Information darüber übermittelt, welche Art von weiteren Kommunikationskanal gewählt werden soll, welche Adressierung notwendig ist, sowie beispielsweise auch Informationen darüber, welche Komponenten des Gebäudetechniksystems über den weiteren Kanal angesteuert werden sollen, um die entsprechende Steuerung des Gebäudetechniksystems zu erreichen. Hierzu können beispielsweise Adressinformationen und Ansteuerungsparameter übermittelt werden. Zu verstehen ist auch, dass in der softwaretechnischen Anwendung oder damit funktional verbunden, ein Speicher des mobilen Kommunikationsendgeräts Parameter abspeichern kann, die dann in Assoziation mit über die Nahfeld-Kommunikationsschnittstelle erfassten Parameter abgerufen und durch die softwaretechnische Anwendung interpretiert und ausgewertet werden. Die softwaretechnische Anwendung kann dann auf Basis dieser Parameter ebenfalls die dem Benutzer dargestellte Benutzerschnittstelle entsprechend darstellen.

Über eine Benutzerschnittstelle, die durch die softwaretechnische Anwendung auf dem mobilen Kommunikationsendgerät und der damit verbundenen Anzeigeeinheit dargestellt wird, kann dann auch beispielsweise eine Szenensteuerung für Beleuchtungs- und Lichtinstallationen abrufbar sein und grafisch visualisiert, simuliert und erläutert werden. Insbesondere kann eine Erläuterung zu allen Funktionen, die durch die Benutzerschnittstelle dargestellt werden, erfolgen. So kann der Benutzer sich, anders als bei den üblichen Fernbedienungen, über die genaue Funktionsweise der verschiedenen Funktionen informieren und ein "trial and error"-Ansatz ist nicht länger notwendig.

Die softwaretechnische Anwendung kann auch erst nach Eingabe einer Autorisierungsinformation, insbesondere eines Passworts, bestimmte Funktionen verfügbar machen. Nach Eingabe der Autorisierungsinformation wird dann also eine oder mehrere Funktionen durch die Benutzerschnittstelle dargestellt bzw. zugänglich gemacht. Somit können abhängig von der Autorisierungsinformation bestimmte Funktionalitäten der softwaretechnischen Anwendung dem Benutzer zugänglich gemacht werden. Insbesondere können dies besondere Konfigurations- und Kalibrierungsfunktionen sein, die nur durch bestimmte Benutzer oder vom Personal des Herstellers des Gebäudetechniksystems ausgeführt werden sollen.

Ist beispielsweise nahe an einem Schalter des Gebäudetechniksystems eine Kommunikationsschnittstelle zur Nahfeld-Kommunikation vorgesehen, kann eine Parametrisierung der softwaretechnischen Anwendung ortsaufgelöst erfolgen. Dies hat den Vorteil, dass - im Vergleich zu beispielsweise einer Ortsbestimmung über WLAN oder andere Funktechniken - sichergestellt ist, dass die Parametrisierung nur für einen bestimmten Bereich eines Gebäudes vorgenommen wird. Insbesondere kann ein WLAN-Signal mehrere Bereiche eines Gebäudes durchdringen. Somit ist eine spezifische, beispielsweise auf Räume ausgelegte ortsbezogene Parametrisierung nicht möglich.

Weiter kann eine ortsaufgelöste Parametrisierung auch in feingranularer Weise erfolgen. Beispielsweise können an Arbeitsplätzen oder in speziellen Bereichen eines Raumes Schnittstellen für eine Nahfeldkommunikation vorgesehen sein, die spezifische Parameter bereitstellen, die jeweils lediglich eine Steuerung bestimmter Komponenten des Gebäudetechniksystems anzeigen. So lässt sich beispielsweise die Beleuchtungssteuerung an Arbeitsplätzen abhängig von Parametern, die über die jeweiligen Kommunikationsschnittstellen des Gebäudetechniksystems ausgegeben werden, gesteuert werden. Dies kann insbesondere dadurch erfolgen, dass der Parameter, der über die Nahfeld-Kommunikationsschnittstelle übermittelt wird, einen Identifikator, wie beispielsweise eine Adresse, aufweist, die eine oder mehrere bestimmte Komponenten des Gebäudetechniksystems identifiziert und lediglich eine Ansteuerung dieser Komponenten erlaubt.

Besonderes Ziel ist es eine Ansteuerung von Beleuchtungseinheiten und Beleuchtungskomponenten eines Gebäudetechniksystems zu erreichen. Insbesondere weist also der Parameter wenigstens einen Identifikator für einzelne oder Gruppen von Leuchten, Beleuchtungseinheiten und/oder Busteilnehmern eines Gebäudetechniksystems auf. Der wenigstens eine erfasste Parameter ist also vorzugsweise ein Parameter eines Licht-, Beleuchtungs- und/oder Bussystems.

In Fig. 1 ist zunächst ein mobiles Kommunikationsendgerät 1, das eine Anzeigeeinheit 2 und eine Eingabeeinheit 3 aufweist. Bei dem mobilen Kommunikationsendgerät 1 handelt es sich vorzugsweise um ein Smartphone oder ein Tablet. Die Anzeigeeinheit 2 ist vorzugsweise ein Display, beispielsweise ein LCD, IPS, ePaper-Display. Die Eingabeeinheit 3 kann beispielsweise ein Touchpad, eine Tastatur, ein Eingabestift, eine Maus und/oder ein Trackpad sein. Es ist jedoch zu verstehen, dass die Anzeigeeinheit 2 und die Eingabeeinheit 3 auch zu einer Eingabe- und Anzeigeeinheit, kombiniert sein können, beispielsweise in Form eines berührungsempfindlichen Displays (Touch Screen).

Weiter weist das mobile Kommunikationsendgerät 1 eine Steuereinheit SE auf, die u.a. dazu dient, die Nahfeld-Kommunikation mit einer Kommunikationsschnittstelle 4 eines Gebäudetechniksystems GT durchzuführen. Hierzu kommuniziert die Steuereinheit SE über eine Nahfeld-Kommunikationsschnittstelle 5 des mobilen Kommunikationsendgeräts 1 mit der Kommunikationsschnittstelle 4 des Gebäudetechniksystems GT. Die Steuereinheit SE liest insbesondere wenigstens einen Parameter P des Gebäudetechniksystems aus. Dieser Parameter P, der über die vorzugsweise drahtlose Nahfeld-Kommunikationsschnittstelle 5 des mobilen Kommunikationsendgeräts 1 empfangen wird, wird dann einer softwaretechnischen Applikation 6 hinzugeführt, die durch das mobile Kommunikationsendgerät 1 bzw. die Steuereinheit SE ausgeführt wird.

Die softwaretechnische Anwendung 6 kann auf einen Datenspeicher 8 zugreifen, der entweder im mobilen Kommunikationsgerät 1 oder funktional damit verbunden vorgesehen ist. Beispielsweise kann dieser Datenspeicher auf einem entfernten Computersystem bzw. als ein CloudSpeicher realisiert sein. Die softwaretechnische Anwendung 6 ist weiter dazu eingerichtet, auf Basis und abhängig von dem wenigstens einen erfassten Parameter P eine Benutzerschnittstelle 9 auf der Anzeigeeinheit 2 darzustellen und eine Benutzereingabe an und/oder für die Benutzerschnittstelle 9 über die Eingabeeinheit 3 auszuwerten.

Basierend auf der Eingabe übermittelt die Steuereinheit SE dann Ansteuerdaten an das Gebäudetechniksystem GT. Dabei ist zu verstehen, dass die Steuereinheit SE auch aus mehreren Verarbeitungseinheiten bzw. Prozessoren bestehen kann. So können beispielsweise verschiedene Arten von Prozessoren und Steuerschaltungen (Mikroprozessoren, ICs, ASICS) vorgesehen sein, die auch parallel Daten verarbeiten und austauschen können. Zudem muss nicht jede Steuereinheit die Eingabe und Ausgabe und Erfassungsoperationen des mobilen Kommunikationsendgeräts verarbeiten und/oder ausführen. Es können lediglich einzelne Teile der Steuereinheit SE vorgesehen sein, um unterschiedliche Aufgaben ausführen.

Die softwaretechnische Anwendung 6 stellt Funktionen 91, 92 zur Steuerung des Gebäudetechniksystems GT bereit. Dabei ist die Komplexität der dargestellten und bereitgestellten Funktionen insbesondere so dargestellt, dass diese gemäß Ihrer Komplexität bzw. gemäß einer vorgegebenen Gewichtung angeordnet bzw. gruppiert werden. So sind erfindungsgemäß Funktionen auf mehreren logischen Ebenen der Benutzerschnittstelle angeordnet. Ein Benutzer kann beispielsweise durch eine Eingabebewegung von einer logischen Ebene zu einer anderen logischen Ebene gelangen. Die logischen Ebenen können miteinander verknüpft sein oder einzeln abrufbar vorgesehen sein. Zudem kann es, wie bereits gesagt, vorgesehen sein, dass bestimmte Funktionen 92 lediglich nach einer Autorisierung, beispielsweise nach Eingabe einer Kennung, eines Identifikators, eines Passworts, eines kryptografischen Schlüssels usw. freigegeben wird. Insbesondere kann es vorgesehen sein, dass erst nach Freigabe durch eine externe Quelle die bestimmten Funktionen 92 freigegeben werden. So kann es beispielsweise vorgesehen sein, dass bestimmte Funktionen 92 erst freigeschaltet werden, wenn die softwaretechnische Anwendung eine Autorisierung mit einem entfernten System durchführt. Hierbei kann es sich beispielsweise um die Bestätigung einer Zahlungsoperation handeln.

Die softwaretechnische Anwendung 6 ist vorzugsweise weiter dazu eingerichtet, zusätzliche Informationen zu den Funktionen darzustellen. Hierzu kann die softwaretechnische Anwendung 6 auf den Datenspeicher 8 zugreifen und so Informationen in Assoziation mit den Funktionen 91, 92 abrufen und diese auf der Benutzerschnittstelle 9 darstellen. Insbesondere ist es vorgesehen, dass Hilfefunktionen 93, wie Erklärungs- und/oder Hilfetexte, -animationen oder andere Medieninhalte dargestellt und abgerufen werden, die die Funktionsweise der Funktionen und deren Wirkung verdeutlichen. Hierzu kann die softwaretechnische Anwendung 6 auch lediglich Abfrageadressen (z.B. Web-Adressen) aus dem Speicher auslesen und dann die durch die Abfrageadressen identifizierten Inhalte von einem externen System abrufen. Die Medieninhalte, bzw. Hilfetexte und anderen Inhalte können dann auf eine Benutzereingabe hin an der Anzeigeeinheit 2 dargestellt werden.

Insbesondere stellt die softwaretechnische Anwendung 6 über die Benutzerschnittstelle 9 Eingabe und Steuerelemente dar, die eine Szenensteuerung, -planung, - änderung und/oder -festlegung ermöglichen. Die softwaretechnische Anwendung 6 kann insbesondere Eingaben über die Eingabeeinheit 3 in Bezug auf die Benutzerschnittstelle 9 auswerten, ausführen und/oder speichern und die Eingaben und/oder gespeicherten Inhalte, bzw. in Assoziation zu diesen Eingaben in dem Datenspeicher 8 gespeicherte Information, an das Gebäudetechniksystem GT übermitteln. Insbesondere ist es möglich, Szenenkonfigurationen zu erstellen, zu verändern oder zu löschen. Die softwaretechnische Anwendung 6 wertet also Benutzereingaben an der Eingabeeinheit 3 aus.

Die softwaretechnische Anwendung 6 greift vorzugsweise auf eine weitere Kommunikationsschnittstelle 10 des mobilen Kommunikationsgeräts 1 zu, um Ansteuerdaten an das Gebäudetechniksystem GT zu übermitteln. So erfolgt die Ansteuerung von Komponenten K1, K2, K3 des Gebäudetechniksystems GT über einen weiteren, vorzugsweise drahtlosen, Kommunikationskanal.

Die Speichereinheit 8 ist insbesondere dazu eingerichtet, auch eine Benutzerschnittstellenkonfiguration zu speichern. Die Steuereinheit SE und/oder die softwaretechnische Anwendung 6 kann dann basierend auf dem erfassten Parameter P eine Benutzerschnittstellenkonfiguration aus einer Anzahl verschiedener Benutzerschnittstellenkonfigurationen abrufen und die Benutzerschnittstelle 9 gemäß der ausgewählten Benutzerschnittstellenkonfiguration darstellen. Weiter ist vorgesehen, dass ein Benutzer auch mittels eine Eingabe eine Benutzerschnittstellenkonfiguration auswählen kann. Hierzu können beispielsweise Menüpunkte vorgesehen sein, die eine entsprechende Auswahl durch eine Benutzereingabe ermöglichen.

Weiter ist die Speichereinheit 8 dazu eingerichtet, Definitionen für zulässige und/oder unzulässige Benutzereingaben zu speichern. Die Steuereinheit SE und/oder die softwaretechnische Anwendung 6 wählen dann auf Basis des erfassten Parameters P wenigstens eine definierte zulässige Benutzereingabe aus, beziehungsweise rufen sie aus der Speichereinheit 8 ab. Die Steuereinheit SE bzw. die softwaretechnische Anwendung 6 überprüfen dann Benutzereingaben darauf, ob es sich um zulässige oder unzulässige Benutzereingaben handelt. Unzulässige Benutzereingaben können dann insbesondere verworfen werden.

Weiter kann eine Darstellung der Funktionen 91, 92 auf der Benutzerschnittstelle 9 auf Basis der zulässigen Benutzereingaben erfolgen. Es können insbesondere nur Funktionen 91, 92 dargestellt werden, die (potentiell) zulässige Benutzereingaben definieren. Andererseits ist es auch vorgesehen, dass die softwaretechnische Anwendung 6 und/oder die Steuereinheit SE vor einem Absenden der Ansteuerdaten auf Basis der zulässigen und/oder unzulässigen Definitionen prüft, welche Ansteuerdaten an das Gebäudetechniksystem GT übermittelt werden. Insbesondere werden lediglich Ansteuerdaten übermittelt, die zulässigen Benutzereingaben entsprechen.

Die Steuereinheit SE ist insbesondere dazu eingerichtet, die softwaretechnische Anwendung 6 automatisch zu starten, wenn sie einen insbesondere vorbestimmten Parameter P über die Nahfeld-Kommunikationsschnittstelle 5 des Kommunikationsendgeräts 1 erfasst.

Bei dem Parameter P kann es sich insbesondere um einen Identifikator, eine Seriennummer und/oder eine MAC-Adresse handeln. Insbesondere kann der wenigstens eine Parameter P Informationen darüber erfassen, welcher weitere Kommunikationskanal zu wählen ist. Informationen über das Gebäudetechniksystem GT können von der Steuereinheit SE und/oder der softwaretechnischen Anwendung 6 unter Verwendung des Parameters P auch von einem entfernten System, z.B. einem mit einem Netzwerk verbundenen Server, abgefragt werden. Dies kann unter Verwendung der weiteren Kommunikationsschnittstelle 10, z.B. einer WLAN, GSM, LTE, Zigbee, Bluetooth, Ethernet und/oder einer anderen drahtgebundenen oder drahtlosen Schnittstelle erfolgen.

Die softwaretechnische Anwendung 6 bzw. die Steuereinheit SE ist dann dazu in der Lage, auf Basis des wenigstens einen Parameters P und der damit übermittelten Informationen die wenigstens eine weitere Kommunikationsschnittstelle 10 des mobilen Kommunikationsgeräts 1 auszuwählen und die Ansteuerdaten über die wenigstens eine weitere ausgewählte Kommunikationsschnittstelle 10 zu senden.

Auf Basis des wenigstens einen Parameters P kann die softwaretechnische Anwendung 6 und/oder die Steuereinheit SE eine Adresse und/oder eine Adressierungsart zur Ansteuerung des Gebäudetechniksystems GT ermitteln. Diese Adresse und/oder Adressierungsart wird dann verwendet, um auf Basis der Benutzereingaben bezüglich der dargestellten Funktionen 91, 92 das Gebäudetechniksystem GT zu steuern. Bei dem Gebäudetechniksystem GT handelt es sich insbesondere um ein Beleuchtungssystem. Insbesondere werden lichttechnische Parameter an das Gebäudetechniksystem übermittelt, um lichttechnische Einstellungen vorzunehmen.

So kann beispielsweise ein Dimmen wenigstens eines Leuchtmittels, eine Farbortänderung und/oder die Aktivierung/Deaktivierung wenigstens eines Leuchtmittels erfolgen. Auch kann, wenn in der Datenspeichereinheit 8 entsprechende Informationen hinterlegt sind, die bezüglich der Ortsauflösung die vorhandenen Gebäudetechniksystemkomponenten K1, K2, K3 definieren, auch eine Auswahl der entsprechenden Gebäudetechniksystemkomponenten K1, K2, K3 über die Benutzerschnittstelle erfolgen. Hierzu kann beispielsweise auf den Datenspeicher 8 zugegriffen werden, in dem die Gebäudetechniksystemkomponenten K1, K2, K3 assoziiert mit dem Parameter P hinterlegt sind. Die Gebäudetechniksystemkomponenten K1, K2, K3 können, beispielsweise auch in einer einen Raumgrundriss wiedergebenden Darstellung auf der Benutzerschnittstelle dargestellt werden, so dass eine Auswahl der Gebäudetechniksystemkomponenten K1, K2, K3 durch den Benutzer ermöglicht wird.

Die Gebäudetechniksystemkomponenten K1, K2, K3 können dabei über Identifikatoren zugreifbar sein. So ist es beispielsweise möglich, dass auf Basis des wenigstens einen Parameters P aus einem entfernten Server abgerufen wird, welche Gebäudetechniksystemkomponenten in einem Bereich eines Gebäudes vorhanden sind, der über den wenigstens einen Parameter P identifiziert wird. Das mobile Kommunikationsendgerät 1 sendet dann eine Abfrage an den Datenspeicher 8, der wie gesagt auch ein entfernter Datenspeicher beziehungsweise ein Cloudspeicher sein kann, und ermittelt dort die in dem Bereich vorhandenen Gebäudetechniksystemkomponenten K1, K2, K3. Dies kann beispielsweise auf Basis des Identifikators erfolgen, der mit einer Anfrage an den Datenspeicher übermittelt wird. Die abgerufene Information kann durch die Steuereinheit SE beziehungsweise die softwaretechnische Anwendung 6 dahingehend ausgewertet werden, dass eine insbesondere symbolische Darstellung der Gebäudetechniksystemkomponenten K1, K2, K3 auf der Benutzerschnittstelle erfolgt. Ein Benutzer kann dann durch eine Eingabe eine entsprechende Gebäudetechniksystemkomponente K1, K2 und/oder K3 auswählen und über auf der Benutzerschnittstelle dargestellte Funktionen 91, 92 Einstellungen für die Gebäudetechniksystemkomponenten K1, K2 und/oder K3 vornehmen. Selbstverständlich können auch Gruppen von Gebäudetechniksystemkomponenten K1, K2, K3 angesteuert werden.

Insbesondere ist jedoch die softwaretechnische Anwendung 6 dazu ausgelegt, basierend auf dem wenigstens einen Parameter P Funktionen 91, 92 auf der Benutzerschnittstelle 9 darzustellen, die einem Fernbedienungstyp entsprechen. Insofern wird eine virtuelle Fernbedienung durch die Benutzerschnittstelle 9 dargestellt, die für das durch den wenigstens einen Parameter P identifizierte Gebäudetechniksystem konfiguriert ist. Die softwaretechnische Anwendung 6 kann auch über den weiteren Kommunikationskanal Daten von Sensoren und Aktoren abfragen beziehungsweise entsprechende Informationen auf der Anzeigeeinheit 2 beziehungsweise mittels der Benutzerschnittstelle 9 darstellen. Entsprechend können Parameter dieser Sensoren auch über ein Zeitintervall hinweggesammelt dargestellt, ausgewertet, verändert, und/oder gesetzt werden.

Es können mittels der Benutzerschnittstelle 9 und/oder der softwaretechnischen Anwendung 6 auch Konfigurationsdaten und Kalibrierungsdaten zu Gebäudetechniksystemkomponenten K1, K2, K3, z.B. Busteilnehmern, des Gebäudetechniksystems GT übermittelt werden. Die Nahfeld-Kommunikationsschnittstelle 5 kann eine NFC- oder RFID-Schnittstelle sein.

Das Gebäudetechniksystem GT weist wenigstens die Nahfeld-Kommunikationsschnittstelle 4 auf, wobei das Gebäudetechniksystem wenigstens einen Parameter P über die wenigstens eine Nahfeld-Kommunikationsschnittstelle 4 ausgibt. Der Parameter P kann dabei veränderlich sein, so dass ein auszugebender Parameter P durch das Gebäudetechniksystem GT konfigurierbar ist. Somit lässt sich beispielsweise über eine Zentraleinheit des Gebäudetechniksystems GT der Parameter P verändern und setzen. Insofern weist das Gebäudetechniksystem also wenigstens auch eine Steuereinheit auf (nicht gezeigt), die eine entsprechende Ansteuerung der Nahfeld-Kommunikationsschnittstelle 4 ermöglicht. Zudem ist ebenfalls eine weitere Kommunikationsschnittstelle 11 des Gebäudetechniksystems GT vorgesehen, um Ansteuerdaten zu empfangen. Auf Basis der empfangenen Ansteuerdaten erfolgt dann eine Ansteuerung und/oder Konfiguration des Gebäudetechniksystems oder der Gebäudetechniksystemkomponenten K1, K2, K3.

Das Gebäudetechniksystem gibt als Parameter P beziehungsweise als Teil des wenigstens einen Parameters P insbesondere eine Kennung für den weiteren Kommunikationskanal aus, der es dem mobilen Kommunikationsendgerät 1 ermöglicht, eine Kommunikation mit der weiteren Kommunikationsschnittstelle des Gebäudetechniksystems aufzunehmen. Auf Basis der empfangenen Ansteuerdaten konfiguriert das Gebäudetechniksystem GT also Gebäudetechniksystemkomponenten K1, K2, K3 wie Aktoren, Sensoren und/oder Busteilnehmer beziehungsweise übermittelt Daten von und/oder zu diesen.

Das Gebäudetechniksystem GT und das Kommunikationsendgerät 1 bilden somit zusammen ein System 100, wie es in Fig. 1 dargestellt ist.

## Patentansprüche

1. Mobiles Kommunikationsendgerät (1), aufweisend
- eine Anzeigeeinheit (2) und eine Eingabeeinheit (3), vorzugsweise eine kombinierte Eingabe-und-Anzeigeeinheit (4),
- eine Nahfeld-Kommunikationsschnittstelle (5), und
- eine Steuereinheit (SE),
wobei die Steuereinheit (SE) ,dazu eingerichtet ist, über die Nahfeld-Kommunikationsschnittstelle (5) wenigstens einen Parameter (P) eines Gebäudetechniksystems (GT) auszulesen und für eine durch das mobile Kommunikationsendgerät (1) ausgeführte softwaretechnische Anwendung (6) bereitzustellen, wobei die softwaretechnische Anwendung (6) dazu ausgelegt ist, abhängig von dem wenigstens einen Parameter (P) eine Benutzerschnittstelle (9) auf der Anzeigeeinheit (2) darzustellen und eine Benutzereingabe an der Benutzerschnittstelle (9) über die Eingabeeinheit (3) auszuwerten und auf der Benutzereingabe basierende Ansteuerdaten an das Gebäudetechniksystem (GT) zu senden,
wobei die softwaretechnische Anwendung (6) dazu eingerichtet ist, Funktionen (91, 92) zur Steuerung des Gebäudetechniksystems (GT) bereitzustellen, die verschiedene Komplexitäten aufweisen, und wobei die softwaretechnische Anwendung (6) die Funktionen (91, 92) mittels der Benutzerschnittstelle gemäß ihrer Komplexität gruppiert auf mehreren logischen Ebenen darstellt, wobei auf einer ersten Ebene ein Ein- und/oder Ausschalten aufrufbar sind, während in weiteren Ebenen eine Programmierung und Anweisungen an das Gebäudetechniksystem eingegeben werden.

2. Mobiles Kommunikationsendgerät (1) nach Anspruch 1, wobei die softwaretechnische Anwendung (6) dazu eingerichtet ist, zusätzliche Informationen (93) zu den Funktionen (91, 92) bereitzustellen, und wobei softwaretechnische Anwendung (6) dazu eingerichtet ist, die zusätzlichen Informationen (93) mittels der Benutzerschnittstelle (8) darzustellen, insbesondere in Assoziation zu den Funktionen (91, 92) zur Steuerung des Gebäudetechniksystems (GT) und/oder auf eine Benutzereingabe hin.

3. Mobiles Kommunikationsendgerät (1) nach einem der vorgehenden Ansprüche, wobei die Funktionen (91, 92) dazu vorgesehen sind, eine Szenenkonfiguration zu erstellen, zu verändern und/oder zu löschen.

4. Mobiles Kommunikationsendgerät (1) nach einem der vorgehenden Ansprüche, wobei die softwaretechnische Anwendung (6) dazu eingerichtet ist, Benutzereingaben über die Eingabeeinheit auszuwerten und die Funktionen (91, 92) oder einen Teil der Funktionen (91, 92) nach Auswertung einer insbesondere vordefinierten Benutzereingabe bereitzustellen.

5. Mobiles Kommunikationsendgerät nach einem der vorgehenden Ansprüche, wobei die softwaretechnische Anwendung (6) dazu eingerichtet ist, die Ansteuerdaten über wenigstens eine weitere Kommunikationsschnittstelle (10) des mobilen Kommunikationsendgeräts, insbesondere eine drahtlose Kommunikationsschnittstelle, an das Gebäudetechniksystem (GT) zu senden.

6. Mobiles Kommunikationsendgerät (1) nach einem der vorgehenden Ansprüche, wobei das mobile Kommunikationsendgerät (1) auf eine Speichereinheit (8) zugreift, die dazu eingerichtet ist, Benutzerschnittstellenkonfigurationen zu speichern, und wobei die Steuereinheit (SE) und/oder die softwaretechnische Anwendung (6) dazu eingerichtet ist, in Assoziation mit dem wenigstens einen Parameter (P) wenigstens eine Benutzerschnittstellenkonfiguration der Benutzerschnittstellenkonfigurationen abzurufen, und die Benutzerschnittstelle (9) gemäß der wenigstens einen Benutzerschnittstellenkonfiguration dazustellen.

7. Mobiles Kommunikationsendgerät (1) nach einem der vorgehenden Ansprüche, wobei die Speichereinheit (8) dazu eingerichtet ist, Definitionen für zulässige Benutzereingaben zu speichern, und wobei die Steuereinheit (SE) und/oder die softwaretechnische Anwendung (6) dazu eingerichtet ist, in Assoziation mit dem wenigstens einen Parameter (P), wenigstens eine definierte zulässige Benutzereingab abzurufen und lediglich Ansteuerdaten basierend auf der wenigstens einen definierten zulässigen Benutzereingabe zu senden.

8. Mobiles Kommunikationsendgerät (1) nach einem der vorgehenden Ansprüche, wobei die Steuereinheit (SE) dazu eingerichtet ist, die softwaretechnische Anwendung (6) automatisch zu starten, wenn sie über die Nahfeld-Kommunikationsschnittstelle (5) den wenigstens einen Parameter (P) ausliest.

9. Mobiles Kommunikationsendgerät (1) nach einem der vorgehenden Ansprüche, wobei die softwaretechnische Anwendung (6) dazu eingerichtet ist, auf Basis des wenigstens einen Parameters (P) die wenigstens eine weitere Kommunikationsschnittstelle (10) des mobilen Kommunikationsendgeräts (1) auszuwählen, und über die ausgewählte wenigstens eine weitere Kommunikationsschnittstelle (10) die Ansteuerdaten zu senden.

10. Mobiles Kommunikationsendgerät (1) nach einem der vorgehenden Ansprüche, wobei die softwaretechnische Anwendung (6) dazu eingerichtet ist, auf Basis des wenigstens einen Parameters (P) eine Adresse, Adressierung und/oder eine Adressierungsart zur Ansteuerung des Gebäudetechniksystems (GT) zu ermitteln.

11. Mobiles Kommunikationsendgerät (1) nach einem der vorgehenden Ansprüche, wobei der wenigstens eine Parameter (P) zulässige Benutzereingaben definiert, und wobei die softwaretechnische Anwendung (6) dazu ausgelegt ist, lediglich für die zulässigen Benutzereingaben die Funktionen (91, 92) darzustellen und Eingaben über die Eingabeeinheit zu akzeptieren.

12. Mobiles Kommunikationsendgerät (1) nach einem der vorgehenden Ansprüche, wobei die softwaretechnische Anwendung (6) dazu ausgelegt ist, basierend auf dem wenigstens einen Adressierungsart einen Fernbedienungstyp als Benutzerschnittstelle (9) darzustellen, der einem für das Gebäudetechniksystem vorgesehenen Fernbedienungstyp entspricht, der insbesondere durch den wenigstens einen Parameter (P) in der Speichereinheit (8) identifizierbar ist.

13. Mobiles Kommunikationsendgerät (1) nach einem der vorgehenden Ansprüche, wobei die softwaretechnische Anwendung (6) dazu ausgelegt ist, basierend auf dem wenigstens einen Parameter (P) Sensor-Informationen mittels der Benutzerschnittstelle (9) auszugeben.

14. Mobiles Kommunikationsendgerät (1) nach einem der vorgehenden Ansprüche, wobei das Gebäudetechniksystem ein Licht- und/oder Beleuchtungssystem ist, und/oder wobei die Nahfeld-Kommunikationsschnittstelle (5) eine RFID und/oder NFC-Schnittstelle ist, und/oder wobei die wenigstens eine weitere Kommunikationsschnittstelle (10) eine Bluetooth, WLAN, und/oder Zigbee-Schnittstelle ist.

15. System (100) aus einem mobilen Kommunikationsendgerät (1) nach Anspruch 1 und einem Gebäudetechniksystem (GT), wobei das Gebäudetechniksystem (GT), aufweist:
- wenigstens eine Nahfeld-Kommunikationsschnittstelle (4), wobei das Gebäudetechniksystem (GT) dazu eingerichtet ist, insbesondere wenigstens einen Parameter (P) des Gebäudetechniksystems (GT) über die wenigstens eine Nahfeld-Kommunikationsschnittstelle (4), vorzugsweise veränderlich, auszugeben,
- eine Steuereinheit, und
- wenigstens eine weitere Kommunikationsschnittstelle (11),
wobei die Steuereinheit dazu eingerichtet ist, das Gebäudetechniksystem (GT) oder Teile davon, insbesondere Gebäudetechniksystemkomponenten (K1, K2, K3), auf Basis von über die wenigstens eine weitere Kommunikationsschnittstelle empfangenen und von dem mobilen Kommunikationsendgerät (1) gesendeten Ansteuerdaten zu steuern und/oder zu konfigurieren.

## Claims

1. Mobile communication terminal (1), comprising
- a display unit (2) and an input unit (3), preferably a combined input-and-display unit (4),
- a near-field communication interface (5), and
- a control unit (SE),
wherein the control unit (SE) is configured to read out at least one parameter (P) of a building services system (GT) via the near-field communication interface (5) and to provide said parameter for a software application (6) executed by the mobile communication terminal (1); wherein the software application (6) is designed to present a user interface (9) on the display unit (2) depending on the at least one parameter (P), and to evaluate a user input at the user interface (9) via the input unit (3), and to transmit to the building services system (GT) control data based on the user input,
wherein the software application (6) is configured to provide functions (91, 92) for controlling the building services system (GT) which have different complexities; and wherein the software application (6) presents the functions (91, 92), grouped according to their complexity, on a plurality of logical levels by means of the user interface; wherein a switching on and/or off can be called at a first level, whereas a program and instructions to the building services system are input at further levels.

2. Mobile communication terminal (1) according to Claim 1, wherein the software application (6) is configured to provide additional information (93) regarding the functions (91, 92), and wherein software application (6) is configured to present the additional information (93) by means of the user interface (8), in particular in association with the functions (91, 92) for controlling the building services system (GT) and/or for a user input.

3. Mobile communication terminal (1) according to any one of the preceding claims, wherein the functions (91, 92) are provided for creating, changing, and/or deleting a scene configuration.

4. Mobile communication terminal (1) according to any one of the preceding claims, wherein the software application (6) is configured to evaluate user inputs via the input unit, and to provide the functions (91, 92) or a portion of the functions (91, 92) after evaluation of an, in particular predefined, user input.

5. Mobile communication terminal according to any one of the preceding claims, wherein the software application (6) is configured to transmit the control data to the building services system (GT) via at least one further communication interface (10) of the mobile communication terminal, in particular a wireless communication interface.

6. Mobile communication terminal (1) according to any one of the preceding claims, wherein the mobile communication terminal (1) accesses a memory unit (8) which is configured to store user interface configurations, and wherein the control unit (SE) and/or the software application (6) is configured to retrieve, in association with the at least one parameter (P), at least one user interface configuration of the user interface configurations, and to present the user interface (9) in accordance with the at least one user interface configuration.

7. Mobile communication terminal (1) according to any one of the preceding claims, wherein the storage unit (8) is configured to store definitions for permissible user inputs, and wherein the control unit (SE) and/or the software application (6) is configured to retrieve, in association with the at least one parameter (P), at least one defined permissible user input and to transmit only control data based on the at least one defined permissible user input.

8. Mobile communication terminal (1) according to any one of the preceding claims, wherein the control unit (SE) is configured to start the software application (6) automatically when it reads the at least one parameter (P) via the near-field communication interface (5).

9. Mobile communication terminal (1) according to any one of the preceding claims, wherein the software application (6) is configured to select, on the basis of the at least one parameter (P), the at least one further communication interface (10) of the mobile communication terminal (1), and to transmit the control data via the selected at least one further communication interface (10).

10. Mobile communication terminal (1) according to any one of the preceding claims, wherein the software application (6) is configured to determine, on the basis of the at least one parameter (P), an address, addressing, and/or an addressing type for controlling the building services system (GT).

11. Mobile communication terminal (1) according to any one of the preceding claims, wherein the at least one parameter (P) defines permissible user inputs, and wherein the software application (6) is designed to present the functions (91, 92) only for the permissible user inputs and to accept inputs via the input unit.

12. Mobile communication terminal (1) according to any one of the preceding claims, wherein the software application (6) is designed to present, based on the at least one addressing type, a remote control type as a user interface (9) which corresponds to a remote control type provided for the building services system, which is in particular identifiable by the at least one parameter (P) in the storage unit (8).

13. Mobile communication terminal (1) according to any one of the preceding claims, wherein the software application (6) is designed to output, based on the at least one parameter (P), sensor information by means of the user interface (9).

14. Mobile communication terminal (1) according to any one of the preceding claims, wherein the building services system is a light system and/or lighting system, and/or wherein the near-field communication interface (5) is an RFID and/or NFC interface, and/or wherein the at least one further communication interface (10) is a Bluetooth, WLAN, and/or ZigBee interface.

15. System (100) consisting of a mobile communication terminal (1) according to Claim 1 and a building services system (GT), wherein the building services system (GT) comprises:
- at least one near-field communication interface (4), wherein the building services system (GT) is configured to output, preferably variably, at least one parameter (P) of the building services system (GT) via the at least one near-field communication interface (4),
- a control unit, and
- at least one further communication interface (11), wherein the control unit is configured to control and/or to configure the building services system (GT) or portions thereof, in particular building services system components (K1, K2, K3), on the basis of control data received via the at least one further communication interface and transmitted by the mobile communication terminal (1).

## Revendications

1. Appareil de communication mobile (1), présentant
- une unité d'affichage (2) et une unité d'entrée (3), de préférence une unité d'affichage et d'entrée combinée (4),
- une interface de communication en champ proche (5) et
- une unité de commande (SE),
l'unité de commande (SE) étant conçue pour lire au moyen de l'interface de communication en champ proche (5) au moins un paramètre (P) d'un système de technique du bâtiment (GT) et de le mettre à disposition pour une application logicielle (6) exécutée par l'appareil de communication mobile (1), l'application logicielle (6) étant conçue pour, en fonction de l'au moins un paramètre (P), représenter une interface utilisateur (9) sur l'unité d'affichage (2) et évaluer une entrée utilisateur dans l'interface utilisateur (9) au moyen de l'unité d'entrée (3) et pour envoyer des données de commande basées sur l'entrée utilisateur au système de technique du bâtiment (GT),
l'application logicielle (6) étant conçue pour fournir des fonctions (91, 92) pour la commande du système de technique du bâtiment (GT), lesquelles présentent différentes complexités et l'application logicielle (6) présentant les fonctions (91, 92) au moyen de l'interface utilisateur regroupées sur plusieurs niveaux logiques en fonction de leur complexité, dans un premier niveau, une mise en marche et/ou à l'arrêt pouvant être appelées, tandis que dans d'autres niveaux, une programmation et des instructions étant saisies dans le système de technique du bâtiment.

2. Appareil de communication mobile (1) selon la revendication 1, l'application logicielle (6) étant conçue pour mettre à disposition des informations supplémentaires (93) concernant les fonctions (91, 92) et l'application logicielle (6) étant conçue pour présenter les informations supplémentaires (93) au moyen de l'interface utilisateur (8), en particulier en association avec les fonctions (91, 92) de commande du système de technique du bâtiment (GT) et/ou en réponse à une entrée utilisateur.

3. Appareil de communication mobile (1) selon l'une quelconque des revendications précédentes, les fonctions (91, 92) étant prévues pour créer, modifier et/ou effacer une configuration de scènes.

4. Appareil de communication mobile (1) selon l'une quelconque des revendications précédentes, l'application logicielle (6) étant conçue pour évaluer des entrées utilisateur au moyen de l'unité d'entrée et pour fournir les fonctions (91, 92) ou une partie des fonctions (91, 92) après l'évaluation d'une entrée utilisateur en particulier prédéfinie.

5. Appareil de communication mobile selon l'une quelconque des revendications précédentes, l'application logicielle (6) étant conçue pour envoyer les données de commande au moyen d'au moins une autre interface de communication (10) de l'appareil de communication mobile, en particulier une interface de communication sans fil, au système de technique du bâtiment (GT).

6. Appareil de communication mobile (1) selon l'une quelconque des revendications précédentes, l'appareil de communication mobile (1) accédant à une unité de mémorisation (8), laquelle est conçue pour mémoriser des configurations d'interface utilisateur et l'unité de commande (SE) et/ou l'application logicielle (6) étant conçues pour, en association avec l'au moins un paramètre (P), appeler au moins une configuration d'interface utilisateur des configurations d'interface utilisateur et pour présenter l'interface utilisateur (9) en fonction de l'au moins une configuration d'interface utilisateur.

7. Appareil de communication mobile (1) selon l'une quelconque des revendications précédentes, l'unité de mémorisation (8) étant conçue pour mémoriser des définitions pour des entrées utilisateur autorisées et l'unité de commande (SE) et/ou l'application logicielle (6) étant conçues pour, en association avec l'au moins un paramètre (P), appeler au moins une entrée utilisateur autorisée définie et pour envoyer uniquement des données de commande basées sur l'au moins une entrée utilisateur autorisée définie.

8. Appareil de communication mobile (1) selon l'une quelconque des revendications précédentes, l'unité de commande (SE) étant conçue pour lancer automatiquement l'application logicielle (6) lorsqu'elle lit l'au moins un paramètre (P) au moyen de l'interface de communication en champ proche (5).

9. Appareil de communication mobile (1) selon l'une quelconque des revendications précédentes, l'application logicielle (6) étant conçue pour, sur la base de l'au moins un paramètre (P), sélectionner l'au moins une autre interface de communication (10) de l'appareil de communication mobile (1) et pour envoyer les données de commande au moyen de l'au moins une autre interface de communication (10) sélectionnée.

10. Appareil de communication mobile (1) selon l'une quelconque des revendications précédentes, l'application logicielle (6) étant conçue pour, sur la base de l'au moins un paramètre (P), déterminer une adresse, un adressage et/ou un type d'adressage pour la commande du système de technique du bâtiment (GT).

11. Appareil de communication mobile (1) selon l'une quelconque des revendications précédentes, l'au moins un paramètre (P) définissant des entrées utilisateur autorisées et l'application logicielle (6) étant conçue pour présenter les fonctions (91, 92) uniquement pour les entrées utilisateur autorisées et pour accepter des entrées au moyen de l'unité d'entrée.

12. Appareil de communication mobile (1) selon l'une quelconque des revendications précédentes, l'application logicielle (6) étant conçue pour, sur la base de l'au moins un type d'adressage, présenter un type de télécommande comme interface utilisateur (9), lequel correspond au type de télécommande prévu pour le système de technique du bâtiment, lequel peut être identifié dans l'unité de mémorisation (8) en particulier au moyen de l'au moins un paramètre (P).

13. Appareil de communication mobile (1) selon l'une quelconque des revendications précédentes, l'application logicielle (6) étant conçue pour, sur la base de l'au moins un paramètre (P), sortir des informations de capteur au moyen de l'interface utilisateur (9).

14. Appareil de communication mobile (1) selon l'une quelconque des revendications précédentes, le système de technique du bâtiment étant un système lumineux et/ou d'éclairage et/ou l'interface de communication en champ proche (5) étant une interface RFID et/ou NFC et/ou l'au moins une autre interface de communication (10) étant une interface Bluetooth, WLAN et/ou Zigbee.

15. Système (100) composé d'un appareil de communication mobile (1) selon la revendication 1 et d'un système de technique du bâtiment (GT), le système de technique du bâtiment (GT) présentant :
- au moins une interface de communication en champ proche (4), le système de technique du bâtiment (GT) étant conçu pour sortir, de préférence de manière variable, en particulier au moins un paramètre (P) du système de technique du bâtiment (GT) au moyen de l'au moins une interface de communication en champ proche (4),
- une unité de commande et
- au moins une autre interface de communication (11),
l'unité de commande étant conçue pour commander et/ou configurer le système de technique du bâtiment (GT) ou des parties de celui-ci, en particulier des composants du système de technique du bâtiment (K1, K2, K3), sur la base de données de commande reçues au moyen de l'au moins une autre interface de communication et envoyées par l'appareil de communication mobile (1).
